# FASCICULE DE BREVET EUROPEEN

(11) **EP 0 888 717 B1**
(45) Date de publication et mention de la délivrance du brevet: **17.09.2003**
(21) Numéro de dépôt: 97202007.7
(22) Date de dépôt: 02.07.1997
(51) Int. Cl.: A23L 1/00, A23L 1/221, A23L 1/23

(54) **Extrait d'arômes**
Aromaextrakt
Aroma extract

(43) Date de publication de la demande: 07.01.1999
(73) Titulaire: SOCIETE DES PRODUITS NESTLE S.A., 1800 Vevey (CH)
(72) Inventeur: Jaeger, Daniel, 1064 St-Cierges (CH); Blank, Imre, 1073 Savigny (CH); Zurbriggen, Beat Denis, 8180 Buelach (CH)
(74) Mandataire: Wavre, Claude-Alain

(56) Documents cités:
- EP-A- 0 381 972
- EP-A- 0 416 713
- EP-A- 0 755 632
- BLANK I ET AL: "FORMATION OF 3-HYDROXY-4,5-DIMETHYL-2(5H)-FURANONE (SOTOLONE) FROM 4-HYDROXY-L-ISOLEUCINE AND 3-AMINO-4,5-DIMETHYL-3,4-DIHYDRO-2(5H)- FURANONE" JOURNAL OF AGRICULTURAL AND FOOD CHEMISTRY, vol. 44, no. 7, 1 juillet 1996, pages 1851-1856, XP000594199

## Description

La présente invention a pour objet un procédé de préparation d'un extrait d'arômes.

Le Trigonella foenum-graecum est une légumineuse très répandue dans certains pays méditerranéens, ainsi qu'en Argentine et en Inde (Y.S Lewis, Spices and Herbs for the food industry, food Trade Press, 1984, p. 141-142). Les graines de Trigonella foenum-graecum sont utilisées notamment comme épices, pour la préparation du curry en Inde par exemple, comme légumes, comme fourrage pour animaux ou pour leurs pouvoirs médicinaux (El-Mahdy et al., Food Chemestry, 1985, 18, 19-33).

Il est également connu d'utiliser le Trigonella foenum-graecum pour son pouvoir aromatique.

Ainsi, EP 0381972 décrit un procédé d'utilisation de Trigonella foenum-graecum moulu et rôti ou non dans la préparation d'une sauce soja ou d'une sauce de poisson, de manière à raffiner leur goût.

Par ailleurs, EP 0623580 décrit la formation stéréospécifique de l'acide (4S)-hydroxy-3-méthyl-2-ketopentanoique à partir du 4 hydroxy-Lisoleucine, isolé de trigonella foenum-graecum, traité enzymatiquement à l'aide d'une L-aminoacide-oxydase ou à l'aide de micro-organismes produisant une telle enzyme mais ne pouvant pas être utilisés dans le domaine alimentaire. Le 5(S)-sotolone est ensuite formé spontanément à partir de l'acide (4S)-hydroxy-3-méthyl-2-ketopentanoique.

La présente invention a pour but de proposer un procédé simple et rapide permettant la préparation d'un extrait d'arômes à partir de graines de trigonella foenum-graecum contenant diverses composés aromatiques, donnant une note ronde aux compositions alimentaires, dans lesquelles on l'incorpore.

A cet effet, dans le procédé de préparation d'extrait d'arômes, selon la présente invention, on prépare un mélange contenant des graines de Trigonella foenum-graecum, on effectue une hydrolyse enzymatique de ce mélange, on le traite thermiquement, on le centrifuge, de manière à isoler la phase liquide contenant les arômes, puis on concentre cette phase liquide par évaporation.

On a constaté avec surprise que le procédé selon la présente invention permet de réaliser un extrait, à partir de graines de Trigonella foenum-graecum, comprenant différents composés aromatiques, en plus de la sotolone. Cet extrait d'arômes peut être avantageusement utilisé, notamment, sous forme liquide, sous forme pâteuse ou sous forme de poudre, pour la préparation de compositions alimentaires, telles que, notamment, des sauces, des bouillons liquides ou solides, des fromages, des soupes ou des plats culinaires, de manière à renforcer leur note aromatique.

Ainsi dans le procédé selon la présente invention, on prépare donc un mélange contenant au moins des graines de Trigonella foenum-graecum. On peut notamment utiliser les graines de Trigonella foenum-graecum, commercialisées par la Société Samen Mauser A.G, Industriestrasse 24, CH-8408 Winterthur.

Dans un premier mode de réalisation préféré du présent procédé, on prépare un mélange contenant des graines germées de Trigonella foenum-graecum en poudre. Pour ce faire, on laisse tremper les graines dans de l'eau pendant 10-20h, avant de les déposer dans un appareil de germination, notamment l'appareil Biosnacky, commercialisé par Biorex S.A, BIOREX A.G, Kappler Strasse 55, CH-9642 Ebnat-Kappel. On laisse alors les graines germer dans cet appareil à température ambiante pendant 1-7 jours, en prenant soin de les pulvériser d'eau toutes les 24h00. Puis, on les broie finement, de manière à obtenir une poudre. Si, on laisse germer les graines au delà d'une période de 7 jours, on risque d'avoir des graines germées de Trigonella foenum-graecum contaminées.
De plus, il est connu que le métabolisme des graines de Trigonella foenum-graecum change au cours de la germination. En début de germination, les graines de Trigonella foenum-graecum contiennent très peu de protéases endogènes. Alors qu'après 4 jours de germination, par exemple, elles contiennent une quantité de protéases endogènes plus importante. Aussi, la teneur en acides aminés libres et la teneur en peptides, contenus dans les graines, varient en fonction de la durée de germination des graines, ce qui permet la formation de composés aromatiques plus diversifiés.

Dans un second mode de réalisation préféré du présent procédé, on prépare un mélange contenant 80-95% d'eau et 5-20% de graines de Trigonella foenum-graecum sous forme de farine.

On peut effectuer ensuite l'hydrolyse enzymatique du mélange à un pH compris entre 3,20-7,10, à une température de 40-65° C, pendant 5h00-25h00, par exemple.
On peut notamment effectuer l'hydrolyse enzymatique du mélange, en présence de protéases, de peptidases, d'une arabanase, de cellulases, d'une β-glucanase, d'une hémicellulase, d'une pectinase et/ou d'une xylase. Les enzymes protéolitiques permettent d'augmenter le taux d'hydrolyse de l'extrait d'arômes et les enzymes cellulosiques permettent de réduire sa viscosité et de générer des composés glucidiques. De préférence, on utilise comme mélange d'enzymes, la Flavourzyme 1000L qui est un complexe protéase-peptidase isolé par fermentation d'une souche spécifique de *Aspergillus oryzae,* la Viscozyme L qui est un complexe arabanase, cellulase, β-glucanase, hémicellulase, pectinase et xylase, isolé d'une souche de *Aspergillus* et/ou la Celluclast 1.5L qui est une cellulase, isolée de *Trichoderma reesei*. Ces trois mélanges d'enzymes sont commercialisés par la Société Novo Nordisk Ferment A.G, Neumatt, CH-4243 Dittingen.

Puis, on peut traiter thermiquement le mélange à 75-100° C pendant 10-60 min, de manière à inactiver les enzymes, par exemple.

Si l'on prépare un mélange contenant des graines germées de Trigonella foenum-graecum sous forme de poudre, après le traitement thermique, on peut hydrolyser le mélange avec au moins une galactamannanase, de manière à hydrolyser les sucres que l'on retrouve dans une proportion de l'ordre de 40% par rapport au poids sec des graines germées. Puis, on peut chauffer le mélange à 75-110° C pendant 15-80 min, de manière à inactiver l'enzyme, par exemple. On peut notamment utiliser la Gamanase, commercialisée par Société Novo Nordisk Ferment A.G, Neumatt, CH-4243 Dittingen.

On peut centrifuger le mélange à 4000-6000 rpm pendant 15-45 min, de manière à isoler la phase liquide du mélange contenant les arômes, par exemple. L'étape de centrifugation permet en plus de réduire l'amertume de l'extrait d'arômes, selon la présente invention.

Enfin, on peut évaporer cette phase liquide à une température de 30-70° C, à une pression de 7-15 mbar, pendant 1-3 h, de manière à la concentrer, par exemple.

On peut ensuite sécher la phase liquide concentrée, de manière à obtenir un extrait d'arômes en poudre, par exemple. On peut notamment la sécher sous vide pendant 10-20 h, à une pression de 7-15 mbar et à une température de 55-80° C. On peut également la sécher sur un support, tel que de la maltodextrine et/ou du glucidex, par exemple. Enfin, on peut sécher la phase liquide concentrée par séchage par pulvérisation, par exemple.

A partir de cet extrait d'arômes sous forme liquide ou sous forme de poudre, on peut réaliser un extrait d'arômes pâteux. Ainsi, on peut mélanger, à 45-65° C, 20-40% de l'extrait d'arômes en poudre avec 20-30% d'eau et 30-70% de matière grasse, notamment de la graisse de poule ou de la graisse de boeuf, de manière à obtenir un extrait d'arômes pâteux, par exemple. On peut également réaliser un extrait d'arômes pâteux, en mélangeant 30-70 % d'extrait liquide d'arômes, selon la présente invention, et 30-70 % de matière grasse, notamment de la graisse de poule ou de la graisse de boeuf, par exemple.

La présente invention a notamment pour objet l'extrait d'arômes obtenu par la mise en oeuvre du procédé selon la présente invention.

L'extrait d'arôme peut être incorporé sous forme liquide, sous forme séchée ou sous forme pâteuse, par exemple. Il peut être notamment avantageusement utilisé pour augmenter la note aromatique de sauces, de bouillons liquides ou solides, de fromages, de soupes ou de plats culinaires, par exemple.

Le procédé de préparation ainsi que l'extrait d'arômes, selon la présente invention, sont décrits plus en détails à l'aide de tests analytiques, des tests d'analyses sensorielles et d'exemples d'application, ci-après. Les pourcentages sont donnés en poids, sauf indication contraire.

### Test 1: Mesure du taux d'hydrolyse enzymatique

On prépare un extrait d'arômes, par la mise en oeuvre du procédé selon la présente invention et l'on compare la valeur du taux d'hydrolyse enzymatique de cet extrait avec celles d'échantillons n'ayant pas subi d'hydrolyse enzymatique.

Pour ce faire, on laisse tremper des graines de Trigonella foenum-graecum dans de l'eau pendant 15 h, avant de les déposer dans un appareil de germination de type Biosnacky, commercialisé par la Société Biorex S.A., BIOREX A.G, Kappler Strasse 55, CH-9642 Ebnat-Kappel. On laisse alors les graines germer, à température ambiante, dans cet appareil, pendant 4 jours, tout en les pulvérisant d'eau toutes les 24 h.

On répartit ces graines germées en 3 échantillons équivalents.

On laisse incuber deux de ces échantillons à 25° C, pendant 24 h ou 48 h, avant de mesurer leur taux d'hydrolyse enzymatique.

Parallèlement, on broie finement les graines du troisième échantillon, de manière à obtenir un mélange de graines germées de Trigonella foenum-graecum sous forme de poudre.

Puis, on effectue une hydrolyse enzymatique de ce mélange, en présence de 0,5% de Flavourzyme 1000L, de 1% de Viscozyme L et de 0,5% de Celluclast, à une température de 50° C, à pH 5, pendant 23h00. Ces 3 mélanges d'enzymes sont commercialisées par la Société Novo Nordisk Ferment A.G, Neumatt, CH-4243 Dittingen.

On traite alors thermiquement le mélange à 90° C pendant 20 min, de manière à inactiver les enzymes.

On effectue une hydrolyse du mélange à pH 5, à une température de 65° C, pendant 24h00, en présence de 0,5% de gamannase, commercialisée par la Société Novo Nordisk Ferment A.G, Neumatt, CH-4243 Dittingen. On chauffe ensuite le mélange à 95° C pendant 60 min, de manière à inactiver l'enzyme.

Afin d'isoler la phase liquide contenant les arômes, on centrifuge alors le mélange à 5000 rpm pendant 30 min.

La phase liquide est enfin concentrée par évaporation pendant 2 h à une température de 65° C et sous une pression de 8 mbar. On mesure alors le taux d'hydrolyse de cette phase liquide concentrée qui constitue l'extrait d'arômes.

Les résultats des différentes mesures effectuées sont mentionnés dans le tableau I ci-après.

Le taux d'hydrolyse enzymatique est le rapport entre la quantité de nitrogène total (Ntot) et la quantité d'acides aminés libres (Nα). La quantité de nitrogène total pour chaque échantillon a été mesurée selon la méthode de Kjeldahl décrite notamment par P.R Rexroad et al. (J. AOAC, vol 59, No 6, 1213-1217, 1976). La quantité d'acides aminés libres a été mesurée selon la méthode de va Slyke, décrite, notamment, par P. Schenk et al., (Lebensmitteluntersuchung und Hygiene, 56, 484, 1965).
Par ailleurs la teneur en matière sèche est donnée en % et équivaut au rapport entre la valeur du poids de l'échantillon, après séchage pendant 4 h, à 70° C, sous une pression de 20 mbar, et la valeur du poids total de l'échantillon.

**Tableau I**

| échantillon | hydrolyse enzymatique | incubation | MS (%) | Taux d'hydrolyse (%) |
|---|---|---|---|---|
| 1 | - | 24h00/55° C | 97,4 | 29,80 |
| 2 | - | 48h00/55° C | 96,7 | 27,70 |
| 3 | + | - | 98,0 | 39,8 |
| légende:- MS: teneur en matière sèche - taux d'hydrolyse: mesure de Nα/Ntot | | | | |

Les résultats, mentionnés au tableau I, mettent en évidence l'effet cumulé des enzymes endogènes endogènes et des enzymes protéolitiques, lorsque l'on effectue une hydrolyse enzymatique.
En effet, si on laisse germer les graines pendant 4 jours et qu'on les laisse ensuite incuber à 55° C pendant 24 h ou 48 h, on obtient un taux d'hydrolyse enzymatique, correspondant uniquement à l'activité des enzymes endogènes et qui est nettement inférieur à celui obtenu après hydrolyse enzymatique. Ainsi, l'étape d'hydrolyse enzymatique, permet d'augmenter le rendement d'hydrolyse et, de ce fait, la libération d'acides aminés ainsi que le développement de composés aromatiques divers.

### Test 2: Teneur en sotolone et teneur en 4 hydroxy-L isoleucine dans l'extrait d'arômes en fonction de la durée de germination

On mesure la teneur en sotolone ainsi que la teneur en 4 hydroxy-L isoleucine contenues dans les graines germées de Trigonella foenum-graecum, en fonction de la durée de germination, de manière à déterminer l'activité des enzymes endogènes.

Pour ce faire, on effectue une germination des graines de Trigonella foenum-graecum de la manière telle que décrite au test 1, à l'exception du fait que l'on effectue cette germination pendant 1 jour, 2 jours, 3 jours ou 4 jours.

On laisse ensuite incuber les graines ainsi germées pendant 24 h à 55° C, de manière à permettre l'activité des enzymes endogènes.

On mesure alors la teneur en sotolone ainsi que la teneur en 4 hydroxy-L isoleucine contenues dans les graines germées. La teneur en sotolone est mesurée selon la méthode, telle que décrite par I. Blank et al. (J. Agric. Food Chem., 1966, 44, 1851-1856) et la teneur en 4hydroxy-L isoleucine est mesurée par HPLC.

Les résultats obtenus sont mentionnés dans le tableau II, ci-après.

**Tableau II**

| échantillon | durée de germination (jours) | taux d'hydrolyse (%) | MS (%) | teneur en HIL (mg/g) | teneur en sotolone (ppm) |
|---|---|---|---|---|---|
| témoin | 0 | 4,1 | 25 | 12,3 | 2,0 |
| 1 | 1 | 3,4 | 34 | 8,0 | 1,7 |
| 2 | 2 | 8,8 | 32 | 8,7 | 3,0 |
| 3 | 3 | 8,8 | 34 | 9,0 | 3,7 |
| 4 | 4 | 9,7 | 31 | 11,7 | 7,0 |
| légende:- teneur en HIL: teneur en 4 hydroxy-L isoleucine - la teneur en HIL et la teneur en sotolone sont calculées sur la base d'une teneur en matière sèche égale à 100%. | | | | | |

Les résultats mentionnés au tableau II mettent en évidence le fait que le taux d'hydrolyse augmente en fonction de la durée de germination.
Par ailleurs, ces résultats mettent en évidence le fait que le 4 hydroxy-L isoleucine est un composé qui est consommé au cours de la première phase de germination des graines de Trigonella foenum-graecum. En effet, la teneur en 4 hydroxy-L isoleucine dans l'échantillon témoin est de 12,3 mg/g, alors qu'après 1 jour de germination (échantillon 1) la teneur n'est plus que de 8 mg/g. Ceci s'explique, d'une part, par le fait que le 4 hydroxy-L isoleucine est partiellement métabolisé par les enzymes endogènes qui sont actives au cours de la germination et, d'autre part, par le fait qu'il est décomposé au cours de la réaction de Strecker a une température élevée et en présence de composés α-dicarbonils. Par ailleurs, une partie du 4 hydroxy-L isoleucine est transformé en sotolone, après un temps suffisant de germination. Enfin, le 4 hydroxy-L isoleucine est lactonisé. Mais, on observe également , au cours de la germination, la formation de 4 hydroxy-L isoleucine par les enzymes endogènes.
Ceci permet de comprendre le phénomène de dégradation et de régénération du 4 hydroxy-L isoleucine, au cours de la germination.
Entre le deuxième jour de germination (échantillon 2) et le quatrième jour de germination (échantillon 4), la teneur en 4 hydroxy-L isoleucine augmente pour arriver à une teneur de 11,7 mg/g, qui est une valeur proche de celle mesurée pour les graines de Trigonella foenum-graecum non germées (12,3 mg/g).
Enfin, les résultats mentionnés au tableau II, mettent en évidence le fait que la formation de sotolone est effective après 3 jours de germination des graines de Trigonella foenum-graecum. En effet, après 1 jour de germination, voire même 2 jours, la teneur en sotolone est proche de celle mesurée pour des graines de Trigonella foenum-graecum non germées (échantillon témoin).

### Test 3: Evaluation de la note aromatique

On prépare un extrait, par la mise en oeuvre du procédé selon la présente invention, puis on l'ajoute à une sauce au gluten de blé, pour l'évaluation de la note aromatique.

Pour ce faire, on prépare un extrait d'arômes, tel que décrit au test 1.

On ajoute 5% de cet extrait à une sauce au gluten de blé en poudre. On dilue ensuite le tout dans 250 ml d'eau, tout en mélangeant, de manière à obtenir une sauce onctueuse.

On obtient ainsi une sauce ayant un goût de viande très prononcé

### Test 4: Etude de la stabilité de l'extrait d'arômes

On évalue la stabilité de l'extrait d'arômes, obtenu par la mise en oeuvre du procédé selon la présente invention sur une période de 1 à 5 mois, à différentes températures. L'étude de la stabilité concerne une évaluation de la couleur, la texture du produit ainsi que le goût du produit, selon des analyses organoleptiques.

Pour ce faire, on procède de la manière telle que décrite au test 1, pour préparer un extrait d'arômes selon la présente invention.

On prend une portion de cet extrait que l'on répartit en plusieurs échantillons. On conserve ces échantillons (échantillons 1 à 5) à différente températures (à 4° C, 20° C, 25° C, 30° C ou 37° C), pendant 5 mois et tous les mois on vérifie leur stabilité.

L'autre portion de l'extrait est mélangée avec un bouillon de boeuf, de manière à obtenir une concentration d'extrait d'arômes de 0,619 g/l. Le bouillon de boeuf est réalisé, par mélange dans 1 l d'eau, de 19 g d'une composition contenant 373 g de maltodextrine, 190 g de sel, 100 g d'extrait de levure, 90 g de dextrose, 80 g d'amidon, 65 g de graisse de boeuf, 36 g de sucre, 5 g de couleur caramel, 2,5 g d'oignons, 2 g d'acide citrique, 1 g de poivre, 0,5 g d'ail, 0,5 g de thym et 0,5 g de marjolaine. On répartit également ce bouillon contenant la portion d'extrait d'arôme en 5 échantillons (échantillons 6 à 10) que l'on conserve à différentes températures (à 4° C, 20° C, 25° C, 30° C ou 37° C) pendant 5 mois. On vérifie également tous les mois la stabilité de ces échantillons.

Les résultats de l'étude de stabilité sont mentionnés au tableau III.

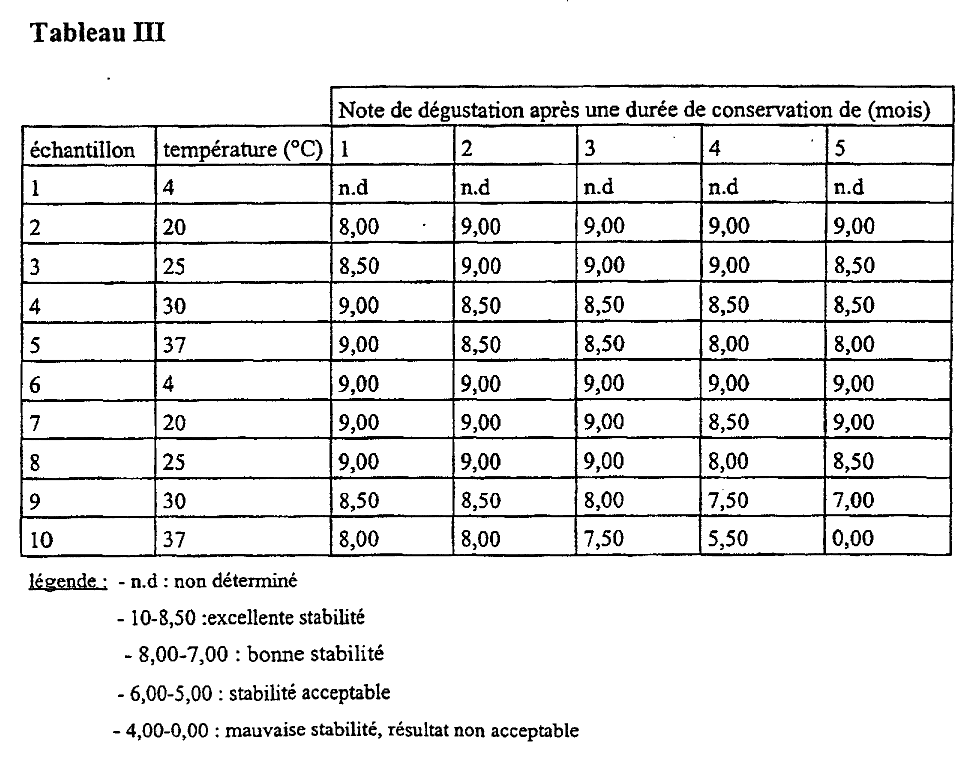

De manière générale, on constate que la stabilité de l'extrait d'arôme est dépendante de réactions chimiques que subit l'extrait d'arômes au cours de période de conservation. Ces réactions chimiques, notamment la réaction de Maillard, dépendent des conditions de stockage, notamment de la durée, de la température et de l'exposition à la lumière.

Les résultats mentionnés au tableau III mettent en évidence le fait que l'extrait d'arômes garde une meilleure stabilité, lorsqu'on le conserve à une température inférieure ou égale à 30° C.
Par ailleurs, lorsque l'on mélange l'extrait d'arômes selon la présente invention avec un bouillon de boeuf, on constate qu'il garde une très bonne stabilité, si on le conserve à 4° C ou à 20° C.
Par contre, les résultats mentionnés au tableau III mettent en évidence le fait que l'extrait d'arômes selon la présente invention, mélangé ou non avec un bouillon de boeuf, perd sa stabilité, quand il est conservé à une température supérieures à 30° C. Cette perte de stabilité de l'extrait d'arômes est dûe à l'accélération, à ces valeurs de température, des réactions chimiques de dégradation, que l'extrait d'arômes subit au cours de sa conservation.
De plus, lorsque l'on mélange l'extrait d'arômes à un bouillon de boeuf, on constate que cela contribue à une augmentation des réactions de Maillard. Ainsi, la qualité de l'extrait d'arômes, dans ces conditions, est de moins en moins bonne plus la température est élevée. On constate, notamment, que l'on perd la note aromatique de viande de la préparation et que l'on obtient une préparation dont la couleur vire de plus en plus au brun sombre.

### Exemple 1

Pour préparer un extrait d'arômes selon la présente invention, on laisse tremper des graines de Trigonella foenum-graecum dans de l'eau pendant 15 h, avant de les déposer dans un appareil de germination de type Biosnacky, commercialisé par la Société Biorex S.A, Kappler Strasse 55, CH-9642 Ebnat-Kapel. On laisse alors les graines germer, à température ambiante, dans cet appareil, pendant 4 jours, tout en les pulvérisant d'eau toutes les 24 h.

On broie finement les graines ainsi germées, de manière à obtenir un mélange de graines germées de Trigonella foenum-graecum sous forme de poudre.

Puis, on effectue une hydrolyse enzymatique de ce mélange, en présence de 0,5% de Flavourzyme 1000L, de 1% de Viscozyme L et de 0,5% de Celluclast, à une température de 50° C, à pH 5, pendant 23 h. Ces 3 enzymes sont commercialisées par la Société Novo Nordisk Ferment A.G, Neumatt, CH-4243 Dittingen.

On traite alors thermiquement le mélange à 90° C pendant 20 min, de manière à inactiver les enzymes.

On effectue une hydrolyse du mélange à pH 5, à une température de 65° C, pendant 24 h, en présence de 0,5% de gamannase, commercialisée par la Société Novo Nordisk Ferment A.G, Neumatt, CH-4243 Dittingen. On chauffe ensuite le mélange à 95° C pendant 60 min, de manière à inactiver l'enzyme.

Afin d'isoler la phase liquide contenant les arômes, on centrifuge alors le mélange à 5000 rpm pendant 30 min.

Puis, la phase liquide est concentrée par évaporation pendant 2h00 à une température de 65° C et sous une pression de 8 mbar.

Enfin, la phase liquide concentrée est séchée en présence d'un support de séchage, la maltodextrine, de manière à obtenir un extrait d'arômes séché.

### Exemple 2

On prépare une composition alimentaire contenant de l'extrait d'arômes séché, tel que réalisé à l'exemple 1.

Pour ce faire, on prépare une composition de départ contenant 378 g de maltodextrine, 190 g de sel, 100 g d'extrait de levure, 91 g de dextrose, 80 g d'amidon, 65 g de graisse de poulet, 36 g de sucre, 0,5 g de couleur caramel, 2,5 g de curcuma, 2 g d'acide citrique, 1 g de poivre, 0,5 g d'ail, 0,5 g de romarin et 0,5 de gingembre.

On ajoute alors dans 1 1 d'eau chaude, 0,62 g de l'extrait d'arômes séché et 19 g de cette composition de départ et 1,2 g de sel.

On réalise une composition alimentaire, un bouillon de poulet, présentant un arôme de poulet très prononcé.

## Revendications

1. Procédé de préparation d'un extrait d'arômes, dans lequel :
- on prépare un mélange contenant au moins des graines de Trigonella foemmi-graecum,
- on effectue une hydrolyse enzymatique de ce mélange,
- on le traite thermiquement,
- on le centrifuge, de manière à isoler la phase liquide contenant les arômes,
- puis on évapore cette phase liquide, de manière à la concentrer.

2. Procédé selon la revendication 1, dans lequel on prépare un mélange contenant des graines germées de trigonella foenum-graecum sous forme de poudre.

3. Procédé selon la revendication 1, dans lequel on prépare un mélange contenant 80-95% d'eau et 5-20% de graines de Trigonella foenum-graecum sous forme de farine.

4. Procédé selon la revendication 1, dans lequel on effectue l'hydrolyse enzymatique du mélange à pH 3,20-7,10, à une température de 40-65° C, pendant 5-25 h.

5. Procédé selon la revendication 4, dans lequel on effectue l'hydrolyse enzymatique du mélange, en présence de protéases, de peptidases, d'une arabanase, de cellulases, d'une β-glucanase, d'une hémicellulase, d'une pectinase et/ou d'une xylase.

6. Procédé selon la revendication 1, dans lequel on traite thermiquement le mélange à 75-100° C pendant 10-60 min.

7. Procédé selon la revendication 1 et 2, dans lequel, après le traitement thermique, on hydrolyse le mélange avec au moins une galactamannanase puis l'on chauffe le mélange à 75-100° C pendant 15-80 min, de manière à inactiver l'enzyme.

8. Procédé selon la revendication 1, dans lequel on centrifuge à 4000-6000 rpm pendant 15-45 min, de manière à isoler la phase liquide contenant les arômes.

9. Procédé selon la revendication 1, dans lequel on évapore la phase liquide contenant les arômes à Due température de 30-70° C, à une pression de 7-15 mbar, pendant 1-3b, de manière à la concentrer.

10. Procédé selon la revendication 1, dans lequel on sèche la phase liquide concentrée, de manière à obtenir un extrait d'arômes sous forme de poudre.

## Patentansprüche

1. Verfahren zur Herstellung eines Aromaextrakts, bei dem
- man eine Mischung herstellt, die mindestens Saat von Trigonella foenum-graecum enthält,
- eine enzymatische Hydrolyse dieser Mischung durchführt,
- sie thermisch behandelt,
- sie so zentrifugiert, daß die die Aromen enthaltende flüssige Phase isoliert wird,
- und dann diese flüssige Phase so eindampft, daß sie konzentriert wird.

2. Verfahren nach Anspruch 1, bei dem man eine Mischung herstellt, die gekeimte Saat von Trigonella foenum-graecum in Form von Pulver enthält.

3. Verfahren nach Anspruch 1, bei dem man eine Mischung herstellt, die 80-95% Wasser und 5-20% Saat von Trigonella foenum-graecum in Form von Mehl enthält.

4. Verfahren nach Anspruch 1, bei dem man die enzymatische Hydrolyse der Mischung C während 5-25h bei pH 3,20-7,10 und einer Temperatur von 40-65° durchführt.

5. Verfahren nach Anspruch 4, bei dem man die enzymatische Hydrolyse der Mischung in Gegenwart von Proteasen, Peptidasen, einer Arabanase, von Cellulasen, einer beta-Glucanase, einer Hemicellulase, einer Pectinase und/oder einer Xylase durchführt.

6. Verfahren nach Anspruch 1, bei dem man die Mischung während 10-60min bei 75-100°C thermisch behandelt.

7. Verfahren nach Anspruch 1 und 2, bei dem man die Mischung nach der thermischen Behandlung mit mindestens einer Galactamannanase hydrolysiert und die Mischung dann während 15-80min auf 75-110°C so erhitzt, daß das Enzym inaktiviert wird.

8. Verfahren nach Anspruch 1, bei dem man während 15-45min mit 4000-6000 rpm so zentrifugiert, daß die die Aromen enthaltende flüssige Phase isoliert wird.

9. Verfahren nach Anspruch 1, bei dem man die die Aromen enthaltende flüssige Phase während 1-3h bei einer Temperatur von 30-70°C und einem Druck von 7-15 mbar so eindampft, daß sie konzentriert wird.

10. Verfahren nach Anspruch 1, bei dem man die konzentrierte flüssige Phase so trocknet, daß man einen Aromaextrakt in Form von Pulver erhält.

## Claims

1. A process for the preparation of a flavour extract, in which:
- a mixture is prepared which contains at least seeds of Trigonella foenum-graecum,
- enzymatic hydrolysis of this mixture is performed,
- said mixture is heat-treated,
- said mixture is centrifuged, so as to isolate the liquid phase containing the flavourings,
- then this liquid phase is evaporated, so as to concentrate it.

2. A process according to claim 1, in which a mixture is prepared which contains germinated seeds of Trigonella foenum-graecum in the form of powder.

3. A process according to claim 1, in which a mixture is prepared which contains 80-95% of water and 5-20% of Trigonella foenum-graecum seeds in the form of flour.

4. A process according to claim 1, in which enzymatic hydrolysis of the mixture is performed at a pH of 3.20-7.10 and a temperature of 40-65°C for 5-25 hours.

5. A process according to claim 4, in which enzymatic hydrolysis of the mixture is performed in the presence of proteases, peptidases, an arabanase, cellulases, a β-glucanase, a hemicellulase, a pectinase and/or a xylase.

6. A process according to claim 1, in which the mixture is heat-treated at 75-100°C for 10-60 minutes.

7. A process according to claim 1 and 2, in which, after heat-treatment, the mixture is hydrolysed with at least one galactomannanase, then heated to 75-110°C for 15-80 minutes, so as to inactivate the enzyme.

8. A process according to claim 1, in which centrifugation is performed at 4000-6000 rpm for 15-45 minutes, so as to isolate the liquid phase containing the flavourings.

9. A process according to claim 1, in which the liquid phase containing the flavourings is evaporated at a temperature of 30-70°C at a pressure of 7-15 mbar for 1-3 hours, so as to concentrate it.

10. A process according to claim 1, in which the concentrated liquid phase is dried, so as to obtain a flavour extract in powder form.
